Europäisches Patentamt

European Patent Office

Office européen des brevets

(11) Publication number: **0 543 462 A1**

## EUROPEAN PATENT APPLICATION

(21) Application number: **92203532.4**

(22) Date of filing: **17.11.92**

(51) Int. Cl.5: **C08L 77/02**, C08K 3/00

(30) Priority: **18.11.91 EP 91202989**

(43) Date of publication of application:
**26.05.93 Bulletin 93/21**

(84) Designated Contracting States:
**DE FR GB IT NL**

(71) Applicant: **DSM N.V.**
**Het Overloon 1**
**NL−6411 TE Heerlen(NL)**

(72) Inventor: **Leeuwendal, Robert Maarten**
**Louis Loyenstraat 4**
**NL−6221 AK Maastricht(NL)**

(54) Flame retardant polyamides.

(57) A non−halogen flame retardant polyamide composition containing synergistically effective amounts of (a) an antimony compound (b) a char forming organic compound and (c) a char stabilizing compound. In a preferred embodiment (b) is a polyphenylene ether or a novolac and (c) anhydrous zinc borate or a wollastonite.

The present invention relates to flame retardation of polyamides with particular regard to non – halogen flame retardants.

Flame retardation of thermoplastic polyamides by addition of various relatively low molecular weight (i.e. non – polymeric) organic additives, frequently together with antimony oxide, is known in the art. Typical organic additives include polybrominated aromatic hydrocarbons and ethers, as well as polychlorinated polycyclic hydrocarbons. However these additives are not wholly satisfactory because they generate smoke and corrosive hydrogen halides upon burning, and in some cases are subject to toxicological and environmental concerns. They also require sufficiently high loading so as to cause significant loss of some of the desirable physical properties of the polyamide.

Phosphorus compounds have also been used to flame retard thermoplastic polyamides. However, they are relatively inefficient and tend, in many cases, to cause undesired plasticization as well as degradation in processing. Red phosphorus has been used, but poses some handling hazard and can cause evolution of some phosphine in processing or thereafter.

Polyamides processed at lower temperatures can be flame retarded with ammonium polyphosphate or organic phosphates, but nylons processed at higher temperatures, such as above 200° are damaged by such additives, probably due to acid formation. It has been especially difficult to flame retard nylon 4,6 which is processed above 300°, since only a few aromatic halogen additives (which entail the problem mentioned above) have enough stability. Furthermore it has not been possible to find an available phosphorus – based flame retardant additive with enough stability or inertness towards the polyamide.

One object of the present invention is to provide a non – plasticizing, non – corrosive and non – degrading flame retardant additive for thermoplastic polyamides, in particular for those polyamides pro – cessed above 200°C up to the temperature of unacceptable decomposition of the polymer itself. The present invention is especially usefull for flame retarding nylon 4,6 which is processed at above 300°C.

The present invention includes at least one thermoplastic polyamide to which a high flame retardancy is imparted by introducing components comprising flame retardant effective amounts of:

(a) an antimony compound, preferably being substantially water insoluble; and

(b) a char forming organic compound, preferably a thermoplastic polymer including aromatic groups in the backbone. The thermoplastic polymer is substantially stable and substantially free of volatile components at the processing temperature of the polyamide;

(c) a char stabilizing material, preferably a substantially water insoluble anhydrous borate, a low melting glass or a fibrous inorganic material.

Surprisingly, the present invention provides highly effective flame retardancy despite being substantially halogen free. The use of antimony trioxide as flame retardant is known in halogen systems, but it has been disclosed in the literature that antimony compounds are relatively useless as flame retardants in the absence of halogen; see for instance E.D. Weil in flame retardants of polymeric materials, W.J. Kuryla and A.J. Papa, eds., Vol. 3 Marcel Dekker, N.Y. (1975), p. 198.

Blends of polyphenylene oxides, a char forming polymer, with polyamides are well known, being described, for example, by Aycock, US – A – 4,600,741 and Galluci et al., US – A – 4,659,763. The use of polyphenylene oxides as a flame retarding component in low amounts in polyamides is also known per se, for example as taught by Freitag in US – A – 4,888,370 (Dec. 1989) (DE – A – 3,614,899, May 2, 1986). However, by use of this component alone, only feeble increases in flame retardancy have been achieved, and it has not hitherto been possible to reach high levels of flame retardancy such as oxygen index of 35 or UL 94 V – O in thin sections without use of organic halogen or phosphorus additives as boosters, as taught for example by Taubitz et al., US – A – 4,866,114 (1989).

The use of low melting glasses as flame retardants has some precedent in publications of R.E. Myers et al., J. Fire Sci., (1985) 3, 415 – 431 and 432 – 449, and zinc borate, usually as a hydrate, has been well known as flame retardant and smoke suppressant additive and indeed has been commercially used as such on a large scale, mostly in polyvinyl chloride. The use of zinc borate as a flame retardant component in polyamides has also been known per se, for example as taught by Williams in EP – A – 122698 and 122699 (1984). However, all of these zinc borate applications have been in halogen – containing polymer systems or as in the hydrated form as water release agent. It has not been recognized hitherto that also zinc borate would be a useful flame retardant component in any non – halogen systems.

The advantageous combination of certain antimony compounds, a char forming polymer such as polyphenylene ether, and optionally a char stabilizing material such as zinc borate in thermoplastic polyamides to achieve a high level of flame retardancy at low total additive levels has not hitherto been known or suggested. Our finding that a strong and highly useful synergism (positive interaction greater than additive) results could not have been predicted.

The thermoplastic polyamides of the present invention broadly include any substantially linear polymer having a multiplicity of amide linkages, i.e. $C-C(=O)-N-C$ linkages. Such polyamides thus, encompass condensation polymers made, for instance, by polymerizing a monoaminomonocarboxylic acid or lactam thereof or by condensation polymerization of substantially equimolar amounts of a diamine or derivative thereof (such as a diisocyanate) with a dicarboxylic acid or derivative thereof (such as a diester or dichloride) or by condensation of a diamine salt of an aliphatic or aromatic dicarboxylic acid. The term polyamide in this context includes homopolyamide, copolyamide, terpolyamide, a copolymer with one or more other monomers by copolycondensation or graft polymerisation and mixtures of two or more of the afore mentioned polymers.

The invention exhibits its best advantage in those polyamides or nylons which are processed at high temperatures, such as above 200˚. Such polyamides include nylon 6, nylon 6,6, nylon 11, nylon 12, nylon 4,4, nylon 6,3, nylon 6,4, nylon 6,10, nylon 6,12, nylon 6T and nylon 6/6T for example, these names being well known in the art, and defined for instance in the article on polyamides in the Encyclopedia of Polymer Science & Engineering, 2nd Edition. The most preferred nylon for use in the invention is nylon 4,6 (the polyamide derived from 1,4-butane diamine and adipic acid). When employed with the present invention, nylon 4,6, can be flame retarded without degradation, thus providing great advantages as a solvent-resistant flame retardant molding resin having excellent thermomechanical properties.

It is preferred that the antimony compounds have a particle size below about 50 microns and even more preferred that it be below 10 microns. Compounds having a high active surface show advantages including good flame retardancy if used in a low concentration.

The amount of the antimony compound (a) is broadly from about 0.2% to about 40%, preferably from about 2% to about 20% by weight of the total composition. It wil be evident to one skilled in the art of polymer compounding that the exact amount will depend on the degree of flame retardancy required, and for a given level of flame retardancy, the amount of (a) can be lower as the amount of additives (b) and optionally (c) is higher, and conversely.

The char forming organic compounds (additive (b)), include thermoplastic polymers containing aromatic groups. Additive (b) is preferably a polymer having aromatic rings in the backbone or compounds thereof with metals which form multiple charged cations. The polymer is substantially stable and substantially free of volatile components at the processing temperature of the polyamide. Such polymers include aromatic polysulfides, polysulfones, polyketones, polyimides, polyetherimides and polyarylates. Examples are polyphenylene sulfides, polyphenylene sulfones and polyphenylene ethers.

Other suitable charforming organic compounds are novolacs, (polyhydric phenols), or metal salts thereof, which however should possess sufficient stability at the processing temperature of the polyamide.

Additive (b) is more preferably polyphenylene ethers (PPE), also known as polyphenylene oxides (PPO). Because of the ease of processing with high melting polyamides polyphenylene ether is particularly preferred. PPE also show excellent char forming characteristics.

The polyphenylene ethers for use in the invention comprise a well known class of polymers, the preparation of which is described for example in US-A-3,256,357, 3,257,358, 3,306,874, 3,306,875, 3,914,266, and 4,028,341. They are typically prepared by oxidative coupling, using oxygen and metal catalysts such as copper compounds, of at least one monohydroxyaromatic compound, particularly suitable ones being 2,6-xylenol and 2,3,6-trimethylphenol. Thus, homopolymers and copolymers may be made having 2,6-dimethyl-1,4-phenylene ether units, optionally in combination with (for example), 2,3,6-trimethyl-1,4-phenylene ether units. Such homopolymers and copolymers are commercially available products.

Suitable polyphenylene ethers may also be modified with side chain substituents or end groups which modify properties such as molecular weight, viscosity, impact, strength, or blendability, with other polymers such as polyamides. Side chain modified polyphenylene ethers are described in the patent literature, for instance US-A-4,654,405 and 4,888,397, and may be prepared by grafting onto the polyphenylene ether in known manner such vinyl monomers as acrylonitrile, styrene, and maleic anhydride. Other suitable polymers are the end-group modified polyphenylene ethers in which the modifying agent is reacted in known manner with the hydroxy groups of one or more polyphenylene ether blocks. The polyphenylene ethers as a broad class have molecular weights, Mw, within the range of about 2000-100.000. Either low or high molecular weight polyphenylene ethers may be used in our invention. The state of division of the polyphenylene ether is not critical since it typically fluxes with the polyamide during blending of the composition of the invention, however, for convenience in blending, it is preferably in the form of powder, granules, flakes, beads, or diced cubes.

The amount of additive (b) such as polyphenylene ether is broadly from about 0.2% to about 50%, preferably from about 2% to about 40%. It will be evident to one skilled in the art of polymer compounding that the exact amount will depend on the degree of flame retardancy required, and for a given level of flame retardancy, the amount of (b) can be lower as the amount of additives (a) and (c) is higher, and conversely.

The char stabilizing material (c) is preferably a substantially water insoluble borate, a low temperature melting glass, or an inorganic (e.g., mineral) fibrous material. The glass is more preferably a water insoluble borate low melting glass. Low melting glasses are for instance lead borate glass and alkali phosphate glass having melting points of about $200-600°C$ and preferably $300-500°C$. They are commercially available as solder glasses, frits and glazes. Such glasses include those reported by R.E. Myers, cited before and incorporated by reference in its entirety herein. The glasses of component (c) also include compounds having a low melting glass behavior such as borophosphates.

The borate for use as component (c) may be any borate of zinc, iron or manganese, due to its color preferably zinc; for example, $Zn_2B_6O_{11}$, $ZnB_2O_4$, or $Zn_3B_4O_9$. For use in nylons processed at above $200°C$ and especially for use in nylon 4,6, it is preferred that the zinc borate be substantially anhydrous to avoid hydrolytic degradation of the polyamide during processing. It is preferred that the zinc borate be finely divided, at least below about 50 microns and preferably below about 10 microns, the smaller, the better the activity.

As fibrous material preference is given to short non – combustible, inorganic material or synthetic mineral fiber material, for instance wollastonite, a fibrous calcium silicate, having a length shorter than 50 micron.

The amount of (c) is broadly from about 0.2% to about 40%, preferably from about 2% to about 20%. It will be evident to one skilled in the art of polymer compounding that the exact amount will depend on the degree of flame retardancy required, and for a given level of flame retardancy, the amount of (c) can be lower as the amount of additives (a) and (b) is higher, and conversely.

The amount of thermoplastic polyamide is at a minimum 20% by weight of the total composition.

The method of blending the ingredients of the invention can be conducted by any means suitable for the uniform dispersion of particulate solids, such as mixing in a Banbury mixer or in an extruder.

The polymer mixtures of the invention may also have other ingredients such as pigments, stabilizers, processing aids, coupling agents, lubricants, mold release agents, and electroconductive additives, likewise they may contain reinforcing additives such as glass fibers, mineral fibers, carbon fibers, aramide fibers, talc, mica, gypsum or the like. Minor amounts of other thermoplastics may also be admixed with the nylon, for example impact modifiers such as shell – core acrylic interpolymers.

Other flame retardants such as halogen containing additives can be present but an important feature of the present invention is that it obviates the need for halogenated flame retardant.

Examples

The invention is further illustrated but not limited by the following examples, wherein different levels of the three components a, b and c were powdermixed in nylon 46 (STANYL, DSM, The Netherlands) with relative viscosity of 3.2, melt – kneaded on a Brabender Plasti – corder using a melt temperature of $320°C$ and granulated. Injection moulding of UL94 flammability testbars (thickness 1.6 mm) took place on an Arburg All Rounder machine, melt temperature 310 and mould temperature $120°C$. Nylon 4.6 was chosen for the main part of the experiments as representative example of linear polyamides and as having the highest difficulty degree in flame retarding.
Flammability tests were run according to UL 94 in the vertical position on 1.6 mm testbars.
The burning time, dripping vs non dripping and UL classification were recorded.
Table 1 summarizes the results of these tests.

These examples show the synergistic effect obtained by combining components which, on their own, have no flame retardant effect as measured by the UL test.

Experiments 6, 7, 8 (comparative examples)

UL tests on formulations 6,7 and 8, which only contained one of the components showed burning, no char formation and extensive dripping.
Essentially, A V2 classification was obtained; this is common for nylons without being flame retarded.

Example 1

This formulation showed intensive char formation, nor dripping and V1 classification.

Example 5

Optimizing in zinc borate content leads to a formulation in which char formation was strong no dripping occured and a VO classification was reached.

## TABLE 1: Antimony oxide / PPO / Zincborate examples

Formulation

part in 100 parts by weight nylon 4.6

|  | (a) $Sb_2O_3$ | (b) PPO | (c) $Zn_2B_6O_{11}$ | UL 94 classification |
|---|---|---|---|---|
| 1) | 5 | 5 | 5 | V1 no dripping |
| 2) | 2 | 5 | 5 | burning no dripping |
| 3) | 5 | 5 | 2 | V1 no dripping |
| 4) | 2 | 5 | 7.5 | burning no dripping |
| 5) | 5 | 5 | 7.5 | V0 no dripping |
| 6) | 5 | - | - | V2 dripping |
| 7) | - | 5 | - | V2 dripping |
| 8) | 5 | 5 | - | V2 dripping |
| 9) | - | - | 5 | V2 dripping |
| 10) | 5 | 5 | - | V2 dripping |

Some experiments to confirm the observations with flame retarded nylon 4.6 for the other nylons have been performed with Ultramid A3K, a nylon 66 of BASF.

11) 100 parts by weight nylon 66, 5 parts by weight $Sb_2O_3$, 7.5 parts by weight PPO and 7.5 parts by weight $Zn_2B_6O_{11}$

12) 100 parts by weight nylon 66, 5 parts by weight $Sb_2O_3$, 4 parts by weight Novolac and 7.5 parts by weight $Zn_2B_6O_{11}$

both compositions 11) and 12) qualified V0 no dripping.

Antimonytrioxide used was Blue StarP of Campine, France.
PPO = a poly(2,5-dimethylphenylene)ether of General Electric, USA.
Zincborate = U.S. Borax XPI-187 anhydrous zincborate.
Novolac = Durite SD-1711, a phenol-based novolac, mpt 105°C, of Borden Chemical, USA.

## Claims

1. A flame retardant thermoplastic polyamide composition containing synergistically effective amounts of:
   (a) an antimony compound
   (b) a char forming organic compound
   (c) a char stabilizing material.

2. Composition according to claim 1, in which (a) is substantially water insoluble.

3. Composition according to claim 2 wherein (a) is antimony trioxide.

4. Composition according to anyone of the claims 1 to 3 in which the char forming organic compound (b) is an aromatic groups containing polymer.

5. Composition according to claim 4 wherein the aromatic groups containing polymer is chosen from the group of polyetherimides, polyphenylenesulfides, polyimides, polyarylates, polyphenylene ethers and novolacs.

6. Composition according to claim 5 wherein the aromatic groups containing polymer is a polyphenylene ether.

7. Composition according to claim 5 wherein the aromatic groups containing polymer is a novolac.

8. Composition according to anyone of the claims 1 to 7 wherein (c) is chosen from the group of substantially water insoluble borates, low melting glasses and fibrous materials.

9. Composition according to claim 8 wherein (c) is chosen from the group of borates of zinc, iron or manganese.

10. Composition according to claim 9 wherein (c) is zinc borate, preferably anhydrous zinc borate.

**11.** Composition according to claim 8 wherein (c) is wollastonite.

**12.** Composition according to claim 1 wherein the amount of
(a) is between 0.2 and 40% by weight
(b) is between 0.2 and 50% by weight
(c) is between 0.2 and 40% by weight
of the total composition with the proviso that said thermoplastic polyamide is at least 20% by weight.

**13.** Composition according to claim 1, wherin the particle size of (a) and (c) is smaller than about 50 microns, preferably smaller than about 10 microns.

**14.** A flame retardant thermoplastic polyamide composition as essentially disclosed in the description and examples.

**15.** Moulded article of the composition of any one of the claims 1 – 13.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-0 122 699 (IMPERIAL CHEMICAL INDUSTRIES)<br>* table 1 *<br>* claims 1-5 * | 1-6,8-9, 12 | C08L77/02<br>C08K3/00 |
| X | EP-A-0 254 209 (TEIJIN LIMITED)<br><br>* page 3, line 41 - line 42 *<br>* tables 1-2 *<br>* claims 1,4,6-9 * | 1-5,7-8, 12 | |
| X | EP-A-0 139 893 (OCCIDENTAL CHEMICAL CORPORATION)<br><br>* table 2 *<br>* claims 1-15 * | 1-4, 8-10,12, 15 | |
| X | DE-A-2 656 883 (RHONE POULENC)<br><br>* page 6-7; examples 3-4 *<br>* claims 1-3 * | 1-3, 8-10,12, 15 | |
|  | ----- |  | TECHNICAL FIELDS SEARCHED (Int. Cl.5 )<br><br>C08K<br>C08L |

The present search report has been drawn up for all claims

| Place of search | Date of completion of the search | Examiner |
|---|---|---|
| THE HAGUE | 12 FEBRUARY 1993 | SIEMENS T. |

EPO FORM 1503 03.82 (P0401)